# EUROPÄISCHE PATENTANMELDUNG

(11) **EP 3 591 811 A1**
(43) Veröffentlichungstag der Anmeldung: **08.01.2020**
(21) Anmeldenummer: 19183666.7
(22) Anmeldetag: 01.07.2019
(51) Int. Cl.: H02K 5/04, H02K 15/02

(54) **ELEKTROMOTOR UND VERFAHREN ZUM HERSTELLEN EINES ELEKTROMOTORS**

(30) Priorität: 02.07.2018 LU 100863
(71) Anmelder: Ovalo GmbH, 65555 Limburg (DE)
(72) Erfinder:
(74) Vertreter: Hoffmann, Jürgen

(57) **Zusammenfassung**

Die Erfindung betrifft ein Verfahren zum Herstellen eines Elektromotors, bei dessen Ausführung ein Stator in einem Motorgehäuse, das eine Motorgehäusewandung aufweist, befestigt wird. Das Verfahren zeichnet sich dadurch aus, dass der Stator in das Motorgehäuse eingeführt und in einer Sollposition positioniert wird, wobei zwischen dem Motorgehäuse und dem Stator wenigstens ein Aufnahmeraum für ein Füllmaterial entsteht, und dass der Aufnahmeraum danach durch einen Einfüllkanal mit einem Füllmaterial gefüllt wird

## Beschreibung

Die Erfindung betrifft ein Verfahren zum Herstellen eines Elektromotors, bei dessen Ausführung ein Stator in einem Motorgehäuse, das eine Motorgehäusewandung aufweist, befestigt wird.

Die Erfindung betrifft außerdem einen Elektromotor, der nach einem solchen Verfahren hergestellt ist und einen Elektromotor, der einen Stator und ein Motorgehäuse aufweist, in dem der Stator fixiert ist.

Elektromotore, insbesondere solche, die als Innenläufer ausgebildet sind, weisen zumeist ein Motorgehäuse auf, in dem ein Stator drehfest befestigt ist. Das Befestigen erfolgt zumeist mittels einer Presspassung oder durch Kleben.

Aus DE 199 35 723 B4 ist beispielsweise ein Verfahren zur Herstellung einer Elektromotoranordnung bekannt, bei dem ein Stator und ein Motorgehäuse mittels eines Klebeschrumpfprozesses zusammengefügt werden.

Aus DE 10 2010 028 989 A1 ist ein Verfahren zur Herstellung eines Elektromotors mit einem in einem Motorgehäuse aufgenommen Stator bekannt, bei dem zur Montage zunächst das Motorgehäuse auf eine Fügetemperatur erwärmt wird und anschließend der Stator in das Motorgehäuse eingesetzt wird, wobei zusätzlich der Außenmantel des Stators mit der Innenseite des Motorgehäuses verklebt wird.

JP 2012 147570 A offenbart eine elektrische Maschine bestehend aus einem Stator, in dem eine Spule um einen Statorkern gewickelt ist, einem Gehäuse, das den Stator umschließt, einem Rotor, der vom Gehäuse getragen wird, und einer Klebstoffschicht, die einen Zwischenraum zwischen dem Stator und dem Gehäuse ausfüllt. In den Zwischenraum werden bei der Herstellung des Elektromotors die Restmaterialien aus der Produktion der zuvor hergestellten Elektromotoren, nämlich übergebliebener Draht und Reste der Statorkerne eingefüllt.

JP 2014 054046 A offenbart die Herstellung eines Stators. Zur Herstellung des Stators wird ein Statorkern in einen Statorrahmen gepresst. Sobald die beiden Statorelemente zusammengefügt sind, wird anschließend ein Klebematerial in die dazwischenliegenden Freiräume eingegeben.

JP 2008 312347 A offenbart ein Gehäuse für einen Elektromotor. Die Innenwand des Gehäuses weist umlaufende Nuten auf, in die Klebematerial eingegeben wird. Das Klebematerial wird in das Gehäuse eingegeben, bevor die übrigen Teile des Elektromotors, insbesondere der Statorkern, eingesetzt werden.

Das Festkleben eines Stator in ein Motorgehäuse ist in der Praxis problematisch. Dies insbesondere weil besondere Anforderungen an die Klebung gestellt werden, weil zumeist ganz unterschiedliche Materialien mit ganz unterschiedlichen Wärmeausdehnungskoeffizienten miteinander verklebt werden müssen. Hierbei ist zu beachten, dass der Stator zuverlässig derart drehfest in dem Motorgehäuse befestigt wird, dass sich der Stator auch bei sehr hohen Drehmomenten zuverlässig an dem Motorgehäuse abstützen kann. Hierzu ist es unter anderem erforderlich, dass die vorgesehenen Klebeflächen vollständig mit Kleber bedeckt werden.

Elektromotore sind oftmals, insbesondere wenn sie in ihrem Maximallastbereich betrieben werden, akustisch auffällig. Dies ist insbesondere problematisch, wenn Elektromotore in einem Kraftfahrzeug zum Einsatz kommen, weil die Fahrzeuginsassen von einem Elektromotor erzeugte Geräusche als störend empfinden können, oder auf Grund der Geräusche vermuten, dass ein Defekt des Fahrzeuges vorliegt.

Es ist daher die Aufgabe der vorliegenden Erfindung, ein Verfahren anzugeben, das einerseits prozesssicher und zuverlässig ausführbar ist und das es darüber hinaus ermöglicht, einen Stator dauerhaft drehsicher in einem Motorgehäuse zu befestigen.

Die Aufgabe wird durch ein Verfahren gelöst, das dadurch gekennzeichnet ist, dass der Stator in das Motorgehäuse eingeführt und in einer Sollposition positioniert wird, wobei zwischen dem Motorgehäuse und dem Stator wenigstens ein Aufnahmeraum für ein Füllmaterial entsteht, und dass der Aufnahmeraum danach durch einen Einfüllkanal mit einem Füllmaterial gefüllt wird.

Es ist eine weitere Aufgabe der vorliegenden Erfindung, einen Elektromotor anzugeben, bei dem der Stator zuverlässig dauerhaft und drehsicher in einem Motorgehäuse befestigt ist.

Die weitere Aufgabe wird durch einen Elektromotor gelöst, der dadurch gekennzeichnet ist, dass der Stator mittels eines durch einen Einfüllkanal in einen Aufnahmeraum zwischen dem Motorgehäuse und dem Stator eingefüllten Füllmaterials in dem Motorgehäuse fixiert ist.

In erfindungsgemäßer Weise wurde erkannt, dass eine wesentliche Ursache für eine akustische Auffälligkeit eines Elektromotors oftmals in der Ankopplung des Stators an das Motorgehäuse begründet ist. Dies insbesondere, wenn der Stator und das Motorgehäuse aus unterschiedlichen Materialien, insbesondere unterschiedlich steifen Materialien und/oder Materialien mit unterschiedlichen Elastizitätsmodulen und/oder Materialien mit unterschiedlichen Wärmeausdehnungskoeffizienten, hergestellt sind. Beispielsweise sind Materialpaarungen, bei denen das Motorgehäuse aus Aluminium und das zu befestigende Statorjoch aus Weicheisen besteht, besonders problematisch. Es wurde in erfindungsgemäßer Weise erkannt, dass dies insbesondere daran liegt, dass der beispielsweise aus Elektroblechen gefertigte Stator, insbesondere bei Elektromotoren mit hoher Leistungsdichte, bei denen die magnetischen Kräfte besonders hoch sind, fortlaufend stark verformt wird. Beispielsweise kann es vorkommen, dass der Stator zwei Mal pro elektrischer Umdrehung zu einem Oval verformt wird. Das Motorgehäuse wird hierbei nicht mitgezogen, vor allem wenn es aus (unmagnetischem) Aluminium besteht, was zu einer Relativbewegung zwischen dem Stator und dem Motorgehäuse führen kann und sogar so weit gehen kann, dass das Oval fortlaufend gegen das runde Motorgehäuse schlägt und ein hörbares und messbares Geräusch verursacht.

Dieser Effekt wird noch verstärkt, wenn der Elektromotor warm wird. Das liegt an den unterschiedlichen Wärmeausdehnungskoeffizienten von Stator und Motorgehäuse, insbesondere wenn das Gehäuse aus Aluminium besteht. Ein Aluminium-Motorgehäuse dehnt sich bei Erwärmung deutlich mehr aus, als der Stator, so dass der Stator noch mehr freien Raum erhält, sich zu verformen und ggf. gegen das runde Motorgehäuse zu schlagen. Besonders gravierend ist es, wenn der Elektromotor von außen erwärmt wird. In dem Fall ist die relative Ausdehnung zwischen Stator und Motorgehäuse am höchsten, da das Motorgehäuse durch die von außen einwirkende Erwärmung ohnehin eine höhere Temperatur als der Stator besitzt. In diesem Fall ist das akustische Verhalten des Elektromotors oftmals noch viel auffälliger.

In erfindungsgemäßer Weise wurde außerdem erkannt, dass es oftmals zu fehlerhaften Klebungen eines Stators in einem Motorgehäuse kommt und diese fehlerhaften Klebungen ursächlich für ein akustisch auffälliges Verhalten des Elektromotors sein können. Es hat sich herausgestellt, dass es besonders problematisch ist, die Außenseite eines Stators mit Kleber zu versehen und diesen anschließend in ein Motorgehäuse einzuführen. Hierbei kommt es nämlich zumeist dazu, dass Kleber verschoben oder abgestreift wird, so dass einerseits an den vorgesehenen Klebestellen nicht ausreichend viel Kleber zur Verfügung steht und andererseits die Gefahr besteht, dass nicht zu verklebende Bauteile des Elektromotors mit Kleber verunreinigt werden. Zumeist wird daher keine vollflächige Verklebung erzielt, sondern lediglich eine punktuelle Verklebung. Auch im umgekehrten Fall, wenn der Kleber statt auf den Stator auf die Innenseite des Motorgehäuses aufgetragen wird und anschließend der Stator eingeführt wird, kommt es zu den beschriebenen nachteiligen Effekten.

In erfindungsgemäßer Weise wurde außerdem erkannt, dass es von Vorteil ist, ausreichend dicke Schichten von Füllmaterial, insbesondere Kleber, zwischen dem Stator und dem Motorgehäuse vorzusehen. Insbesondere kann die Füllmaterialschicht, insbesondere Klebeschicht, vorteilhaft wenigstens 0,5 mm, insbesondere wenigstens 1 mm, insbesondere wenigstens 1, 5 mm, insbesondere wenigsten 2 mm, dick sein oder eine Dicke im Bereich vom 0,5 mm bis 2 mm aufweisen. Bei einer ganz besonders vorteilhaften Ausführung ist die Füllmaterialschicht, insbesondere Klebeschicht, so dick, dass ihre elastische Dehnbarkeit größer ist, als die maximal zu erwartende Differenz der Ausdehnungen von Stator und Gehäuse. Ein besonderer Vorteil dieser Ausführungen liegt darin, dass eine derart dicke Schicht von Füllmaterial besonders geeignet ist, auch bei großen Temperaturschwankungen eine sichere Verbindung von Stator und Motorgehäuse zu gewährleisten, auch wenn diese aus Materialien mit ganz unterschiedlichen Wärmeausdehnungskoeffizienten hergestellt sind.

Außerdem hat die Erfindung den ganz besonderen Vorteil, dass bei der Herstellung des Elektromotors kein Füllmaterial verschwendet wird, weil ein ungewolltes Verschieben und Abstreifen von Füllmaterial wirkungsvoll vermieden ist.

Bei einer besonders kompakten Ausführung verläuft der Einfüllkanal durch die Motorgehäusewandung hindurch. Insbesondere kann vorteilhaft vorgesehen sein, dass der Einfüllkanal ganz oder wenigstens teilweise radial durch die Motorgehäusewandung hindurch verläuft. Insbesondere bei einer solchen Ausführung kann eine Einfüllöffnung des Einfüllkanals an einer tangential umlaufenden, insbesondere kreiszylinderförmigen, Außenmantelfläche des Motorgehäuses angeordnet sein. Es ist auch möglich, dass der Einfüllkanal ganz oder wenigstens teilweise axial durch die Motorgehäusewandung hindurch verläuft. Insbesondere bei einer solchen Ausführung kann eine Einfüllöffnung des Einfüllkanals an einer Stirnseite des Motorgehäuses angeordnet sein.

Bei einer ganz besonders vorteilhaften Ausführung ist eine Einfüllöffnung des Einfüllkanals innerhalb eines mittels wenigstens einer Dichtung abgedichteten Bereichs des Motorgehäuses angeordnet. Bei einer solchen Ausführung ist die Einfüllöffnung verdeckt und insbesondere gegen Verschmutzung geschützt.

Bei einer ganz besonders vorteilhaften Ausführung, ist ein Auslasskanal vorhanden, durch den beim Einfüllen des Füllmaterials aus dem Aufnahmeraum verdrängte Luft entweichen kann. Auf diese Weise kann sichergestellt werden, dass in dem Aufnahmeraum keine Luftblasen verbleiben. Außerdem kann vorteilhaft vorgesehen sein, dass so lange Füllmaterial durch den Einfüllkanal eingefüllt wird, bis Füllmaterial am Ausgang des Ausgangskanals ankommt. Von besonderem Vorteil ist es, wenn der Einlasskanal an einer Stelle in den Aufnahmeraum mündet, die möglichst weit von der Mündung des Auslandskanals in den Aufnahmeraum entfernt ist. Bei einer solchen Ausführung ist weitgehend sichergestellt, dass der gesamte Aufnahmeraum mit Füllmaterial gefüllt ist, wenn Füllmaterial am Ausgang des Ausgangskanals erscheint.

Bei einer vorteilhaften Ausführung verläuft der Auslasskanal durch die Motorgehäusewandung hindurch. Insbesondere kann vorteilhaft vorgesehen sein, dass der Auslasskanal wenigstens teilweise radial durch die Motorgehäusewandung hindurch verläuft, oder dass der Auslasskanal wenigstens teilweise axial durch die Motorgehäusewandung hindurch verläuft.

Bei einer besonders vorteilhaften Ausführung ist eine Auslassöffnung des Auslasskanals innerhalb des Motorgehäuses angeordnet, so dass die verdrängte Luft insbesondere in das Motorgehäuse und/oder in den Stator entweichen kann. Alternativ oder zusätzlich kann vorteilhaft eine Auslassöffnung des Auslasskanals in einer, insbesondere axial ausgerichteten, Nut der Motorgehäusewandung angeordnet sein. Dies hat den besonderen Vorteil, dass eventuell beim Befüllen ausgetretenes Füllmaterial nicht nach außen übersteht.

Eine Fixierung des Stators in der Sollposition kann in unterschiedlicher Weise realisiert werden. Beispielsweise ist es vorteilhaft möglich, den Stator mittels einer Passung, insbesondere einer Zentrierpassung und/oder einer Presspassung, in der Sollposition vorzufixieren. Insbesondere kann hierbei vorteilhaft vorgesehen sein, dass die Passung wenigstens die radiale Sollposition definiert, während die axiale Sollposition beispielsweise durch einen Axialanschlag definiert sein kann.

Ganz allgemein kann vorteilhaft vorgesehen sein, dass das Motorgehäuse einen, insbesondere umlaufenden, Axialanschlag aufweist und dass der Stator bis zum Erreichen des Axialanschlages in das Motorgehäuse eingeführt wird. Der Axialanschlag kann vorteilhaft zusätzlich die Funktion haben, den Aufnahmeraum zu begrenzen und/oder als Dichtkante für das Füllmaterial zu fungieren.

Auf einen Axialanschlag kann jedoch auch verzichtet werden. Vielmehr kann vorteilhaft auch vorgesehen sein, dass der Stator bis auf seine Sollposition eingepresst wird, wobei mittels der reibschlüssigen Verbindung aufgrund der Passung sicher gestellt ist, dass der Stator in dieser Sollposition verbleibt.

Alternativ oder zusätzlich zu einer Passung kann vorgesehen sein, dass der Stator mittels eines Federelements in dem Motorgehäuse reibschlüssig vorfixiert wird. Das Federelement kann beispielsweise als, insbesondere geschlitzte, Toleranzhülse ausgebildet sein. Es ist alternativ oder zusätzlich auch beispielsweise möglich, dass das Federelement aus einem wellenförmigen Blechband hergestellt ist oder dass das Federelement eine wellenförmige Prägung aufweist.

Es ist insbesondere auch möglich, dass mehrere koaxial angeordnete, aber axial beabstandete Federelemente verwendet werden, um den Stator innerhalb des Motorgehäuses vorzufixieren. Das Federelement kann vorteilhaft beispielsweise aus Stahl, insbesondere aus Federstahl, hergestellt sein.

Bei einer vorteilhaften Ausführung wird der Stator mittels eines hülsenförmigen Federelements, derart in dem Motorgehäuse vorfixiert, dass das hülsenförmige Federelement den Stator umgibt und einerseits an einer Außenumfangsfläche des Stators und andererseits an einer Innenumfangsfläche des Motorgehäuses anliegt. Dies ist insbesondere besonders einfach möglich, wenn die Außenumfangsfläche des Stators kreiszylinderförmig ausgebildet ist und/oder die Innenumfangsfläche des Motorgehäuses kreiszylinderförmig ausgebildet ist.

Eine ganz besonders zuverlässige Befestigung des Stators in dem Motorgehäuse wird bei einer Ausführung erreicht, bei der der Aufnahmeraum den Stator tangential umlaufend umgibt. Insbesondere hierzu kann der Aufnahmeraum vorteilhaft zylinderförmig oder als Labyrinth ausgebildet sein.

Bei einer ganz besonders vorteilhaften Ausführung ist in der Innenseite des Motorgehäuses eine, insbesondere umlaufende, Ausnehmung, insbesondere eine umlaufende Nut oder ein umlaufender Rücksprung, ausgebildet, die nach dem Einführen des Stators in das Motorgehäuse wenigstens einen Teil des Aufnahmeraums bildet. Analog kann, alternativ oder zusätzlich, in der Außenseite des Stators eine umlaufende Ausnehmung, insbesondere eine umlaufende Nut oder ein umlaufender Rücksprung, ausgebildet sein, die nach dem Einführen des Stators in das Motorgehäuse wenigstens einen Teil des Aufnahmeraums bildet.

Insbesondere ist es auch möglich, dass nach dem Einfügen des Stators in das Motorgehäuse mehrere Aufnahmeräume gebildet sind, die anschließend mit Füllmaterial gefüllt werden. Dabei kann bei beispielsweise vorgesehen sein, dass jeder Aufnahmeraum einen eigenen Einfüllanal aufweist. Es ist jedoch auch möglich, dass der einzige Einfüllkanal, der lediglich eine einzige Einfüllöffnung aufweist, sich zu den mehreren Aufnahmeräumen, insbesondere innerhalb des Motorgehäuses, verzweigt. Alternativ ist es auch möglich, dass die Aufnahmeräume fluidisch miteinander verbunden sind, so dass Füllmaterial von einem Aufnahmeraum in den anderen Aufnahmeraum fließen kann.

Bei dem Füllmaterial kann es sich beispielsweise um einen Kleber, insbesondere einen Einkomponentenkleber oder einen Zweikomponentenkleber, handeln. Insbesondere kann alternativ oder zusätzlich vorteilhaft vorgesehen sein, dass das Füllmaterial, wenigstens im ausgehärteten Zustand, ein elektrischer Isolator ist und/oder dass das Füllmaterial wenigstens im ausgeschalteten Zustand nicht brennbar ist. Ein derart ausgebildeter Elektromotor ist besonders robust und unempfindlich gegen einen Betrieb in seinem Hoch- und Höchstlastbereich. Es ist vorteilhaft auch möglich, dass das Füllmaterial einen Kunststoff und/oder ein Harz, insbesondere Epoxidharz oder Polyesterharz, beinhaltet.

Von besonderem Vorteil ist insbesondere ein nach dem erfindungsgemäßen Verfahren hergestellter Elektromotor.

Die Erfindung erlaubt es vorteilhaft insbesondere, dass ein Statorjoch des Stators und das Motorgehäuse aus unterschiedlichen Materialien hergestellt sein können, ohne dass dies wesentliche Nachteile in Bezug auf die Akustik des Elektromotors hat. Insbesondere kann das Statorjoch beispielsweise aus Eisen, insbesondere Weicheisen, und/oder aus Elektroblech hergestellt sein oder Eisen, insbesondere Weicheisen, beinhalten oder aus einem Stapel von Eisenplatten, insbesondere Weicheisenplatten, hergestellt sein. Das Motorgehäuse kann vorteilhaft, insbesondere im Hinblick auf eine gewichtssparende Bauweise, beispielsweise aus Aluminium oder einer Aluminiumlegierung hergestellt sein.

Von ganz besonderem Vorteil ist ein Aktuator, der einen erfindungsgemäßen Elektromotor beinhaltet. Insbesondere kann der Aktuator wenigstens ein dem Elektromotor triebtechnisch nachgeschaltetes Getriebe, insbesondere ein Spannungswellengetriebe, aufweisen. Es ist insbesondere auch möglich, dass dem Elektromotor ein Getriebe triebtechnisch nachgeschaltet ist, das koaxial zum Elektromotor angeordnet ist. Alternativ ist es auch möglich, dass dem Elektromotor ein Getriebe triebtechnisch nachgeschaltet ist, das achsparallel zum Elektromotor angeordnet ist. Zur Ankopplung des Getriebes an den Elektromotor kann hierbei beispielsweise ein Riemengetriebe triebtechnisch dazwischen geschaltet sein.

Ein derartiger Aktuator kann vorteilhaft beispielsweise Teil einer Lenkung, insbesondere einer Überlagerungslenkung und/oder einer aktiven Lenkung und/oder einer Hilfskraftlenkung, sein. Ein derartiger Aktuator kann vorteilhaft beispielsweise auch Teil einer Vorrichtung zum Verstellen des Expansionshubes eines Verbrennungsmotors sein. Ein derartiger Aktuator kann vorteilhaft beispielsweise auch Teil eines aktiven Fahrwerks sein. Es ist vorteilhaft auch möglich, dass ein solcher Aktuator als Teil eines Roboters, insbesondere eines Industrieroboters, verwendet wird oder Teil eines Robotergelenks ist.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1 und 2: eine Illustration eines erstens Schritts eines ersten Ausführungsbeispiels des erfindungsgemäßen Verfahrens,
- Fig. 3: eine Illustration eines zweiten Schritts des ersten Ausführungsbeispiels des erfindungsgemäßen Verfahrens,
- Fig. 4: eine Illustration eines zweiten Ausführungsbeispiels des erfindungsgemäßen Verfahrens, und
- Fig. 5: eine Illustration eines dritten Ausführungsbeispiels des erfindungsgemäßen Verfahrens.

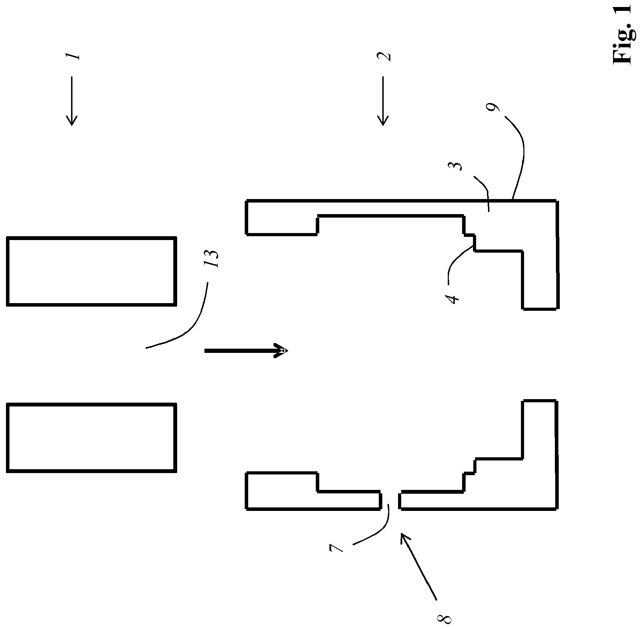

Fig. 1 zeigt eine Illustration eines Schritts eines ersten Ausführungsbeispiels des erfindungsgemäßen Verfahrens zum Herstellen eines Elektromotors, bei dessen Ausführung ein Stator 1 in einem Motorgehäuse 2, das eine Motorgehäusewandung 3 aufweist, befestigt wird. Der Stator 1 und das Motorgehäuse 2 sind jeweils rotationssymmetrisch ausgebildet. Der Stator 1 weist eine Aufnahme 13 auf, in die ein (nicht dargestellter) Rotor eingefügt werden kann.

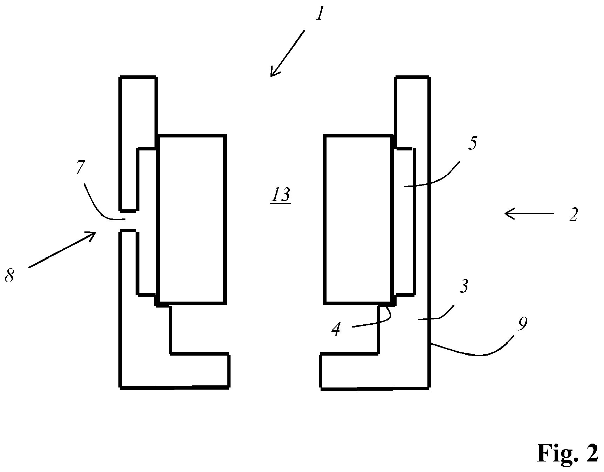

Der Stator 1 wird in das Motorgehäuse 2 eingeführt und in einer Sollposition vorfixiert. Eine Vorfixierung des Stators 1 in der Sollposition wird bei dem gezeigten Ausführungsbeispiel mittels einer Passung realisiert. Im gezeigten Ausführungsbeispiel definiert die Passung die radiale Sollposition, während die axiale Sollposition durch einen Axialanschlag 4 definiert ist. Der Stator 1 wird bis zum Erreichen des Axialanschlages 4 in das Motorgehäuse 2 eingeführt, was in Figur 2 dargestellt ist. Dort hat er seine Sollposition erreicht.

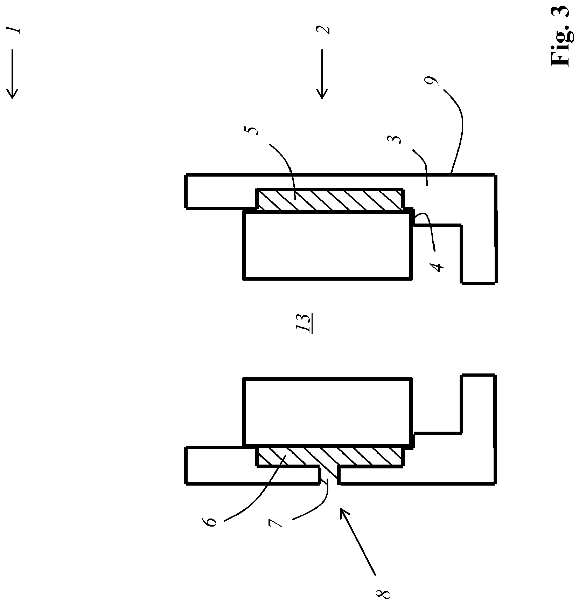

Zwischen dem Stator 1 und dem Motorgehäuse 2 wird beim Einführen ein Aufnahmeraum 5 für ein Füllmaterial, insbesondere einen Kleber 6, ausgebildet. Der Aufnahmeraum 5 wird nach dem Einführen durch einen Einfüllkanal 7, der bei diesem Ausführungsbeispiel radial durch die Motorgehäusewandung 3 verläuft, mit einem Kleber 6 (schraffiert dargestellt) gefüllt, was in Figur 3 dargestellt ist. Die Einfüllöffnung 8 des Einfüllkanals 7 ist an einer tangential umlaufenden, insbesondere kreiszylinderförmigen, Außenmantelfläche 9 des Motorgehäuses 2 angeordnet.

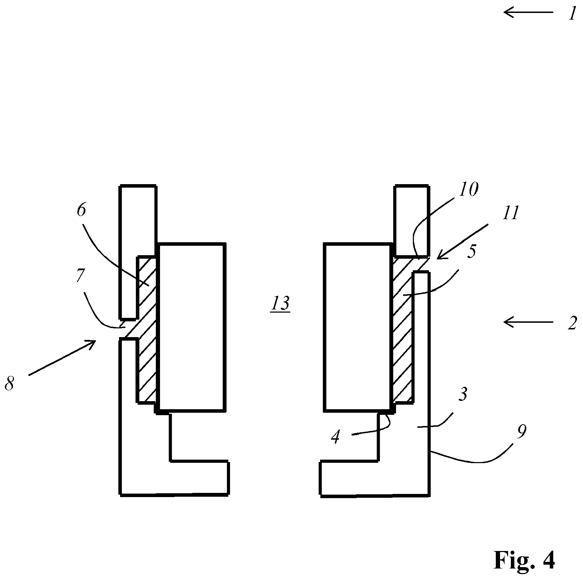

Fig. 4 zeigt ein Ausführungsbeispiel, das im Wesentlichen dem in den Figuren 1 bis 3 gezeigten Ausführungsbeispiel entspricht, wobei jedoch ein Auslasskanal 10 vorhanden ist, durch den beim Einfüllen des Klebers 6 aus dem Aufnahmeraum 5 verdrängte Luft entweichen kann. Auf diese Weise kann sichergestellt werden, dass in dem Aufnahmeraum 5 keine Luftblasen verbleiben. Das Einfüllen von Kleber 6 wird vorzugsweise so lange fortgesetzt, bis am Ausgang 11 des Ausgangskanals 10 Kleber 6 ankommt.

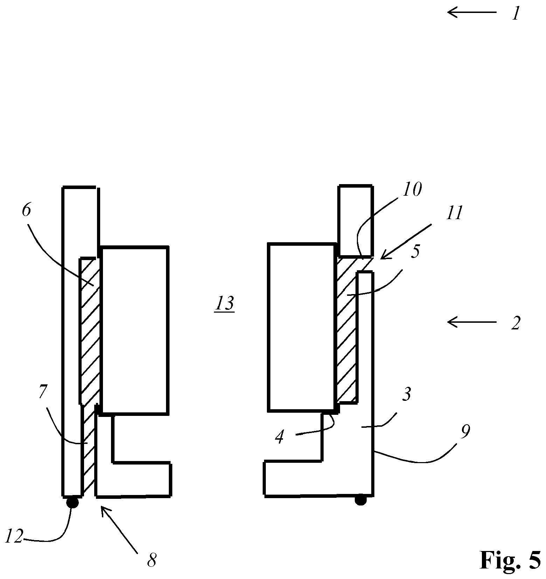

Fig. 5 zeigt ein Ausführungsbeispiel, das im Wesentlichen dem in Figur 4 gezeigten Ausführungsbeispiel entspricht, wobei der Einfüllkanal bei diesem Ausführungsbeispiel nicht radial sondern axial durch die Motorgehäusewandung 3 verläuft und die Einfüllöffnung 8 des Einfüllkanals 7 an einer Stirnseite des Motorgehäuses 2 angeordnet ist.

Außerdem ist die Einfüllöffnung 8 des Einfüllkanals 7 bei diesem Ausführungsbeispiel innerhalb eines mittels einer Dichtung 12, die als Dichtungsring ausgebildet ist, abgedichteten Bereichs des Motorgehäuses 2 angeordnet.

### Bezugszeichenliste:

- 1: Stator
- 2: Motorgehäuse
- 3: Motorgehäusewandung
- 4: Axialanschlag
- 5: Aufnahmeraum
- 6: Füllmaterial, insbesondere einen Kleber
- 7: Einfüllkanal
- 8: Einfüllöffnung
- 9: Außenmantelfläche des Motorgehäuses 2
- 10: Auslasskanal
- 11: Ausgang des Ausgangskanals 10
- 12: Dichtung
- 13: Aufnahme

## Patentansprüche

1. Verfahren zum Herstellen eines Elektromotors, bei dessen Ausführung ein Stator in einem Motorgehäuse, das eine Motorgehäusewandung aufweist, befestigt wird, **dadurch gekennzeichnet, dass** der Stator in das Motorgehäuse eingeführt und in einer Sollposition positioniert wird, wobei zwischen dem Motorgehäuse und dem Stator wenigstens ein Aufnahmeraum für ein Füllmaterial entsteht, und dass der Aufnahmeraum danach durch einen Einfüllkanal mit einem Füllmaterial gefüllt wird.

2. Verfahren nach Anspruch 1, **dadurch gekennzeichnet, dass**
a. der Einfüllkanal durch die Motorgehäusewandung hindurch verläuft, oder dass
b. der Einfüllkanal wenigstens teilweise radial durch die Motorgehäusewandung hindurch verläuft, oder dass
c. der Einfüllkanal wenigstens teilweise axial durch die Motorgehäusewandung hindurch verläuft, oder dass
d. wenigstens ein Auslasskanal vorhanden ist, durch den beim Einfüllen des Füllmaterials aus dem Aufnahmeraum verdrängte Luft entweichen kann oder dass
e. wenigstens ein Auslasskanal vorhanden ist, durch den beim Einfüllen des Füllmaterials aus dem Aufnahmeraum verdrängte Luft entweichen kann und der Auslasskanal durch die Motorgehäusewandung hindurch verläuft, oder dass
f. wenigstens ein Auslasskanal vorhanden ist, durch den beim Einfüllen des Füllmaterials aus dem Aufnahmeraum verdrängte Luft entweichen kann und der Auslasskanal wenigstens teilweise radial durch die Motorgehäusewandung hindurch verläuft, oder dass
g. wenigstens ein Auslasskanal vorhanden ist, durch den beim Einfüllen des Füllmaterials aus dem Aufnahmeraum verdrängte Luft entweichen kann und der Auslasskanal wenigstens teilweise axial durch die Motorgehäusewandung hindurch verläuft, oder dass
h. wenigstens ein Auslasskanal vorhanden ist, durch den beim Einfüllen des Füllmaterials aus dem Aufnahmeraum verdrängte Luft entweichen kann und der Auslasskanal durch die Motorgehäusewandung hindurch verläuft, wobei eine Auslassöffnung des Auslasskanals innerhalb des Motorgehäuses angeordnet ist, so dass die verdrängte Luft insbesondere in das Motorgehäuse und/oder in den Stator entweichen kann, und/oder wobei eine Auslassöffnung des Auslasskanals in einer, insbesondere axial ausgerichteten, Nut der Motorgehäusewandung angeordnet ist.

3. Verfahren nach Anspruch 1 oder 2, **dadurch gekennzeichnet, dass**
a. eine Einfüllöffnung des Einfüllkanals an einer tangential umlaufenden, insbesondere kreiszylinderförmigen, Außenmantelfläche des Motorgehäuses angeordnet ist und/oder dass
b. eine Einfüllöffnung des Einfüllkanals an einer Stirnseite des Motorgehäuses angeordnet ist, und/oder dass
c. eine Einfüllöffnung des Einfüllkanals innerhalb eines mittels wenigstens einer Dichtung abgedichteten Bereichs des Motorgehäuses angeordnet ist.

4. Verfahren nach einem der Ansprüche 1 bis 3, **dadurch gekennzeichnet, dass**
a. der Stator in der Sollposition vorfixiert wird, oder dass
b. der Stator mittels einer Passung, insbesondere einer Zentrierpassung und/oder einer Presspassung, in der Sollposition vorfixiert wird, oder dass
c. der Stator in der Sollposition vorfixiert wird, wobei der Stator mittels eines Federelements in dem Motorgehäuse reibschlüssig vorfixiert wird, oder dass
d. der Stator in der Sollposition vorfixiert wird, wobei der Stator mittels eines Federelements in dem Motorgehäuse reibschlüssig vorfixiert wird, wobei das Federelement als, insbesondere geschlitzte, Toleranzhülse ausgebildet ist und/oder dass das Federelement aus einem wellenförmigen Blechband hergestellt ist oder dass das Federelement eine wellenförmige Prägung aufweist.

5. Verfahren nach einem der Ansprüche 1 bis 4, **dadurch gekennzeichnet, dass**
a. das Motorgehäuse einen, insbesondere umlaufenden, Axialanschlag aufweist und dass der Stator bis zum Erreichen des Axialanschlages in das Motorgehäuse eingeführt wird, oder dass
b. das Motorgehäuse einen, insbesondere umlaufenden, Axialanschlag aufweist und dass der Stator bis zum Erreichen des Axialanschlages in das Motorgehäuse eingeführt wird, wobei der Axialanschlag den Aufnahmeraum begrenzt und/oder dass der Axialanschlag als Dichtkante für das Füllmaterial fungiert.

6. Verfahren nach einem der Ansprüche 1 bis 5, **dadurch gekennzeichnet, dass**
a. der Aufnahmeraum den Stator tangential umgibt, und/oder dass
b. der Aufnahmeraum zylinderförmig oder als Labyrinth ausgebildet ist, und/oder dass
c. in der Innenseite des Motorgehäuses eine, insbesondere umlaufende, Ausnehmung, insbesondere eine umlaufende Nut oder ein umlaufender Rücksprung, ausgebildet ist, die nach dem Einführen des Stators in das Motorgehäuse wenigstens einen Teil des Aufnahmeraums bildet, und/oder dass
d. in der Außenseite des Stators eine umlaufende Ausnehmung, insbesondere eine umlaufende Nut oder ein umlaufender Rücksprung, ausgebildet ist, die nach dem Einführen des Stators in das Motorgehäuse wenigstens einen Teil des Aufnahmeraums bildet, und/oder dass
e. das Füllmaterial ein Kleber, insbesondere ein Einkomponentenkleber oder ein Zweikomponentenkleber, ist und/oder dass das Füllmaterial einen Kunststoff und/oder ein Harz, insbesondere Epoxidharz oder Polyesterharz, beinhaltet, und/oder dass das Füllmaterial, wenigstens im ausgehärteten Zustand, ein elektrischer Isolator ist und/oder dass das Füllmaterial nicht brennbar ist.

7. Elektromotor hergestellt mit einem Verfahren nach einem der Ansprüche 1 bis 6, und/oder, der einen Stator und ein Motorgehäuse aufweist, wobei mittels eines durch einen Einfüllkanal in einen Aufnahmeraum zwischen dem Motorgehäuse und dem Stator eingefüllten Füllmaterials in dem Motorgehäuse fixiert ist.

8. Elektromotor nach Anspruch 7, **dadurch gekennzeichnet, dass**
a. der Einfüllkanal durch die Motorgehäusewandung hindurch verläuft, oder dass
b. der Einfüllkanal wenigstens teilweise radial durch die Motorgehäusewandung hindurch verläuft, oder dass
c. der Einfüllkanal wenigstens teilweise axial durch die Motorgehäusewandung hindurch verläuft.

9. Elektromotor nach Anspruch 7 oder 8, **dadurch gekennzeichnet, dass**
a. ein Auslasskanal vorhanden ist, der den Aufnahmeraum mit einer Auslassöffnung des Motorgehäuses verbindet, oder dass
b. ein Auslasskanal vorhanden ist, der den Aufnahmeraum mit einer Auslassöffnung des Motorgehäuses verbindet, wobei der Auslasskanal durch die Motorgehäusewandung hindurch verläuft, oder dass
c. ein Auslasskanal vorhanden ist, der den Aufnahmeraum mit einer Auslassöffnung des Motorgehäuses verbindet, wobei der Auslasskanal wenigstens teilweise radial durch die Motorgehäusewandung hindurch verläuft, oder dass
d. ein Auslasskanal vorhanden ist, der den Aufnahmeraum mit einer Auslassöffnung des Motorgehäuses verbindet, wobei der Auslasskanal wenigstens teilweise axial durch die Motorgehäusewandung hindurch verläuft.

10. Elektromotor nach Anspruch 9, **dadurch gekennzeichnet, dass**
a. eine Auslassöffnung des Auslasskanals innerhalb des Motorgehäuses angeordnet ist, und/oder dass
b. eine Auslassöffnung des Auslasskanals in einer, insbesondere axial ausgerichteten, Nut der Motorgehäusewandung angeordnet ist.

11. Elektromotor nach einem der Ansprüche 7 bis 10, **dadurch gekennzeichnet, dass**
a. eine Einfüllöffnung des Einfüllkanals an einer tangential umlaufenden, insbesondere kreiszylinderförmigen, Außenmantelfläche des Motorgehäuse angeordnet ist und/oder dass
b. eine Einfüllöffnung des Einfüllkanals an einer Stirnseite des Motorgehäuses angeordnet ist, und/oder dass
c. eine Einfüllöffnung des Einfüllkanals innerhalb eines mittels wenigstens einer Dichtung abgedichteten Bereichs des Motorgehäuses angeordnet ist, und/oder dass
d. der Stator in dem Motorgehäuse zusätzlich reibschlüssig fixiert ist, und/oder dass
e. der Stator in dem Motorgehäuse mittels eines Federelements zusätzlich reibschlüssig fixiert ist, wobei, und/oder dass
f. der Stator in dem Motorgehäuse mittels eines Federelements zusätzlich reibschlüssig fixiert ist, wobei das Federelement als, insbesondere geschlitzte, Toleranzhülse ausgebildet ist und/oder dass
g. der Stator in dem Motorgehäuse mittels eines Federelements zusätzlich reibschlüssig fixiert ist, wobei das Federelement aus einem wellenförmigen Blechband hergestellt ist oder dass das Federelement eine wellenförmige Prägung aufweist, und/oder dass
h. das Motorgehäuse einen, insbesondere umlaufenden, Axialanschlag aufweist, an dem sich der Stator axial abstützt, und/oder dass
i. das Motorgehäuse einen, insbesondere umlaufenden, Axialanschlag aufweist, an dem sich der Stator axial abstützt, wobei der Axialanschlag den Aufnahmeraum begrenzt, und/oder dass
j. der Aufnahmeraum den Stator tangential umgibt, und/oder dass
k. der Aufnahmeraum zylinderförmig oder als Labyrinth ausgebildet ist, und/oder dass
l. in der Innenseite des Motorgehäuses eine, insbesondere umlaufende, Ausnehmung, insbesondere eine umlaufende Nut oder ein umlaufender Rücksprung, ausgebildet ist, die wenigstens einen Teil des Aufnahmeraums bildet, und/oder dass
m. in der Außenseite des Stators eine umlaufende Ausnehmung, insbesondere eine umlaufende Nut oder ein umlaufender Rücksprung, ausgebildet ist, die wenigstens einen Teil des Aufnahmeraums bildet, und/oder dass
n. das Füllmaterial ein Kleber, insbesondere ein Einkomponentenkleber oder ein Zweikomponentenkleber, ist und/oder dass
o. das Füllmaterial das einen Kunststoff und/oder ein Harz, insbesondere Epoxidharz oder Polyesterharz, beinhaltet, und/oder dass
p. das Füllmaterial, wenigstens im ausgehärteten Zustand, ein elektrischer Isolator ist und/oder dass
q. das Füllmaterial nicht brennbar ist.

12. Elektromotor nach einem der Ansprüche 7 bis 11, **dadurch gekennzeichnet, dass**
a. ein Statorjoch des Stators und das Motorgehäuse aus unterschiedlichen Materialien hergestellt sind, und/oder dass
b. das Statorjoch aus Eisen hergestellt ist oder Eisen beinhaltet oder aus einem Stapel von Eisenplatten und/oder aus Elektroblech hergestellt ist.

13. Elektromotor nach Anspruch 12, **dadurch gekennzeichnet, dass** das Motorgehäuse aus Aluminium oder einer Aluminiumlegierung hergestellt ist.

14. Aktuator, insbesondere für ein Kraftfahrzeug oder für eine Lenkung oder zur Ankopplung an einen Verbrennungsmotor oder für ein aktives Fahrwerk oder zur Verstellung des Expansionshubes eines Verbrennungsmotors oder für ein Robotergelenk, wobei der Aktuator einen Elektromotor nach einem der Ansprüche 7 bis 13 aufweist.

15. Aktuator nach Anspruch 14, **dadurch gekennzeichnet, dass** der Aktuator ein dem Elektromotor triebtechnisch nachgeschaltetes Getriebe, insbesondere ein Spannungswellengetriebe, aufweist.
